# FASCICULE DE BREVET EUROPEEN

(11) **EP 3 227 537 B1**
(45) Date de publication et mention de la délivrance du brevet: **02.09.2020**
(21) Numéro de dépôt: 15805594.7
(22) Date de dépôt: 18.11.2015
(51) Int. Cl.: F01M 1/16, F01M 11/10, F16N 29/00

(54) **AGENCEMENT DE MANOCONTACT DANS UNE ELECTROVANNE**
DRUCKKONTAKTANORDNUNG IN EINEM MAGNETVENTIL
PRESSURE CONTACT ARRANGEMENT IN A SOLENOID VALVE

(30) Priorité: 03.12.2014 FR 1461823
(43) Date de publication de la demande: 11.10.2017
(73) Titulaire: Renault S.A.S., 92100 Boulogne-Billancourt (FR)
(72) Inventeur: PORTELA GARNIKA, Gonzalo, 75012 Paris (FR)
(86) Numéro de dépôt international: PCT/FR2015/053120
(87) Numéro de publication internationale: WO 2016/087738

(56) Documents cités:
- WO-A1-02/40913
- GB-A- 2 345 738
- JP-A- H0 861 592

## Description

### Domaine technique de l'invention

La présente invention concerne une électrovanne de pilotage d'une pompe à huile à débit variable.

La présente invention concerne plus particulièrement une électrovanne disposée en place d'un manocontact et reprenant la fonction du manocontact.

L'invention concerne également une électrovanne de pilotage de pompe à huile de véhicule automobile.

### Etat de la technique

Le fonctionnement d'un moteur à combustion interne ou thermique de véhicule automobile nécessite des agencements de circuits de refroidissement et de lubrification. Les deux circuits peuvent comporter une circulation d'huile notamment pour les circuits comportant des portions à proximité de zones très chaudes du moteur comme par exemple les cylindres dans un carter-cylindres ou les circuits d'échappement de gaz brulés disposés dans une culasse du moteur, ou des zones de contact entre des éléments mobiles du moteur.

La circulation d'huile est assurée à l'aide de pompe à huile et il est connu d'utiliser des pompes à débit variable pour optimiser la consommation du moteur, en effet, lors de faibles charges du moteur, il faut éviter de garder le même régime de la pompe à huile pour d'une part réduire la consommation d'énergie et d'autre part éviter de trop forts refroidissements du moteur.

Ladite pompe à huile permet de faire circuler de l'huile dont le débit est contrôlé par une électrovanne. Ladite électrovanne est fixée sur une paroi du carter-cylindres avec une extrémité d'entrée de l'électrovanne plongée dans le circuit d'huile. De manière connue, l'électrovanne comporte au moins un orifice de sortie d'huile connecté avec un circuit d'huile, par exemple une rampe d'huile principale ou distributive connectée avec un circuit de lubrification des pistons. Pour permettre l'ouverture ou la fermeture de l'orifice de sortie, l'électrovanne comprend généralement un bras portant à une première extrémité un moyen d'obturation de l'entrée d'huile, ledit bras étant adapté à coulisser selon son axe et entrainant le moyen d'obturation ainsi pour permettre la connexion de l'entrée d'huile et d'un orifice de sortie d'huile. Le coulissement du bras est autorisé par un solénoïde entourant l'extrémité opposée à la première extrémité, ledit solénoïde est activé par le passage de courant.

Il est connu aussi de mesurer la pression d'huile à l'intérieur du conduit de circulation afin de prévenir des niveaux de pression trop basses susceptibles d'entrainer des dysfonctionnements du moteur ou voire plus grave des pannes dudit moteur. Le niveau de pression d'huile inférieur à un seuil doit alerter au-moins le conducteur et être pris en compte dans une boucle de sécurité et/ou de fiabilité dudit moteur. La pression d'huile est donc mesurée par un manocontact fixé au carter-cylindres et débouchant par un orifice dans le conduit de circulation d'huile.

L'installation de l'électrovanne ainsi que du manocontact nécessite des perçages dans le carter-cylindres, lesdits perçages entrainant ensuite des validations en fiabilité dudit carter-cylindres. Il existe donc un besoin de réduire les nombres de perçages dans le carter-cylindres et notamment de regrouper les fonctions de l'électrovanne et du manocontact afin de bénéficier d'une unique ouverture dans le conduit de circulation d'huile.

La publication FR-A1-2524960 divulgue un agencement d'une électrovanne comportant un cylindre coulissant selon un axe orthogonal à l'axe du conduit de circulation d'huile et d'un manocontact, l'électrovanne et le manocontact sont fixés séparément contre le carter-cylindres et présentent donc des orifices dédiés débouchant dans le conduit de circulation d'huile. La publication GB-2345738-A divulgue un dispositif de connexion comprenant une vanne et un capteur de pression cylindre.

Un inconvénient est donc la nécessité d'aménager des orifices pour l'électrovanne d'une part et pour le manocontact d'autre part, ce qui augmente sensiblement les étapes de fabrication du moteur.

Un autre inconvénient est l'encombrement de cet agencement étant donné que le moteur est disposé dans un compartiment moteur de plus en plus réduit.

Un autre inconvénient est la complexité accrue de la validation du carter-cylindres.

### Bref résumé de l'invention

Le but de l'invention est de pallier ces inconvénients et un des objets de la présente invention est un agencement d'une électrovanne et d'un manocontact nécessitant un unique orifice dans le carter-cylindres et débouchant dans le conduit de circulation d'huile, ledit agencement étant simple et peu couteux pour un moteur thermique.

La présente invention a pour objet un dispositif d'alimentation en fluide de lubrification pour un moteur à combustion interne comprenant :
- un corps cylindrique agencé dans un orifice débouchant dans un conduit de circulation de fluide, ledit corps comportant une bouche d'entrée disposée en une extrémité axiale amont et au moins une bouche de sortie connectée avec un conduit de lubrification du moteur,
- un bouchon fixé à une extrémité d'un bras et entouré par le corps cylindrique, ledit bouchon étant apte à obturer/ouvrir la bouche d'entrée,
caractérisé en ce que le dispositif comprend un réservoir connecté avec le conduit de circulation de fluide, dans lequel débouche un système de mesure de caractéristiques du fluide.

De manière préférentielle, le dispositif d'alimentation en fluide de lubrification comprend un réservoir connecté avec le conduit de circulation de liquide, ce qui permet le remplissage dudit réservoir avec le fluide de lubrification et donc de mesurer la pression dudit liquide par un système de mesure de pression qui débouche dans ledit réservoir. De façon simple, le fluide de lubrification est amené à un endroit facile d'accès et les caractéristiques telles que la pression dudit liquide sont alors facilement mesurées. Le corps cylindrique est une pièce essentielle pour amener du fluide de lubrification vers des conduits de lubrification du moteur.

Selon d'autres caractéristiques de l'invention :
- le dispositif comprend un conduit axial dont une extrémité amont est connectée au conduit de circulation et dont l'extrémité aval opposée est connectée au réservoir.

De manière avantageuse, le dispositif d'alimentation comprend un conduit axial apte à conduire du liquide de lubrification jusqu'au réservoir disposé dans un endroit facile d'accès. Ledit conduit axial comprend donc une première extrémité amont selon le sens d'écoulement du fluide connectée au conduit de circulation de fluide et par laquelle le fluide de lubrification entre dans le conduit pour arriver jusqu'au réservoir. En régime de fonctionnement, le réservoir est rempli de fluide et une variation de pression du fluide de lubrification est immédiatement répercutée dans le fluide dans le réservoir.
- le conduit axial est aménagé dans le corps cylindrique.

De manière avantageuse, le conduit axial est creusé dans le corps cylindrique et présente donc une extrémité amont ouverte et connectée au conduit de circulation de fluide. La seconde extrémité du conduit axial est reliée au réservoir. Le fluide de lubrification entre donc dans le conduit axial par l'extrémité amont dudit conduit pour être amené dans le réservoir.
- le conduit axial est aménagé dans le bras et l'extrémité amont dudit conduit traverse le bouchon.

De manière avantageuse, le conduit axial peut être aménagé dans le bras et l'extrémité amont dudit conduit traverse le bouchon. Le fluide de lubrification pénètre donc dans le conduit axial au niveau du bouchon et est amené au travers du bras dans le réservoir où la caractéristique dudit fluide est alors mesurée. Le bouchon et le bras pouvant coulisser selon l'axe du corps cylindrique, l'extrémité aval du conduit axial est reliée au réservoir par l'intermédiaire de chambres intermédiaires s'étendant sensiblement selon l'axe du corps cylindrique.
- le réservoir est aménagé dans une pièce d'appui fixée au carter du moteur.

De manière avantageuse, le réservoir est aménagé dans une pièce d'appui fixée au carter du moteur. Ainsi, le réservoir n'est pas creusé dans le carter du moteur ce qui peut augmenter sensiblement la masse dudit carter et nécessiter des phases de validation dudit carter.
- le corps cylindrique traverse la pièce d'appui.

De manière avantageuse, le corps cylindrique traverse la pièce d'appui, ce qui permet une adaptation aisée avec différents corps cylindriques existants pour amener du fluide vers des conduits de lubrification du moteur.
- le système de mesure de pression est fixé en appui sur la pièce d'appui.

De manière avantageuse, le système de mesure de la pression est fixé directement sur la pièce d'appui, ce qui limite le nombre de perçages dans le carter du moteur.
- la pièce d'appui est disposée à l'extérieur du carter du moteur.

De manière préférentielle, la pièce d'appui est fixée au carter du moteur à l'extérieur dudit carter. Le dispositif ne nécessite donc qu'un unique perçage dans le carter du moteur dans lequel est emboité le corps cylindrique. La fixation de la pièce d'appui est donc simple.
- le système de mesure de caractéristiques est dans une liste comprenant un manocontact, un thermocouple.

De manière avantageuse, plusieurs caractéristiques dudit fluide de lubrification peuvent être mesurées grâce à ce réservoir rempli avec du liquide présentant les mêmes caractéristiques que le liquide de lubrification dans le conduit de circulation.
- le dispositif est fixé au carter du moteur par l'intermédiaire de la pièce d'appui.

De manière avantageuse, le dispositif est fixé au carter du moteur par l'intermédiaire de la pièce d'appui, ce qui permet de limiter le nombre de points de fixation sur le carter du moteur. De plus, les positions des orifices de fixation du dispositif sont liés à la pièce d'appui et ne dépend donc pas du dispositif d'alimentation lui-même dont les dimensions sont variables en fonction des types de lubrification du moteur.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
- la figure 1 représente une vue schématique de coupe longitudinale d'un dispositif d'alimentation de fluide de lubrification de l'état de l'art.
- la figure 2 représente une vue schématique de coupe longitudinale d'un dispositif d'alimentation selon l'invention selon un mode réalisation.
- la figure 3 représente une vue schématique de coupe longitudinale d'un dispositif d'alimentation selon l'invention selon un autre mode réalisation.

### Description détaillée des figures

Dans la description qui va suivre, des chiffres de référence identiques désignent des pièces identiques ou ayant des fonctions similaires.

Les termes amont /aval sont relatifs au sens d'écoulement du fluide.

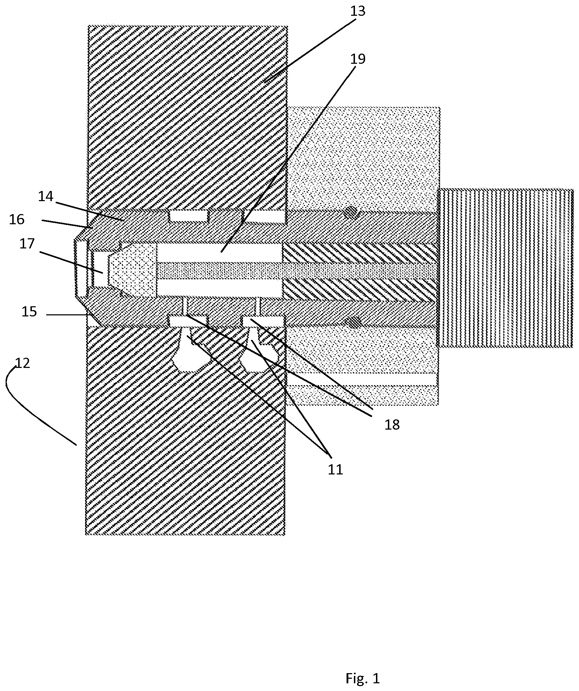

Un moteur thermique ou à combustion interne (non représenté) présente des besoins de lubrification lors de son fonctionnement et il nécessite une alimentation en liquide de lubrification ; ledit fluide parcourt un circuit de lubrification (non représenté) aménagé dans le carter du moteur qui comprend un carter-cylindres et une culasse. Un dispositif d'alimentation 10 de fluide de lubrification est aménagé en amont selon le sens d'écoulement du fluide pour distribuer dans un ou plusieurs conduits 11 de lubrification du fluide de lubrification depuis un point de piquage disposé dans un conduit de circulation 12 de fluide tel que représenté dans la figure 1. Le dispositif d'alimentation de fluide de lubrification est dans une liste comprenant une électrovanne. Dans la suite de la description et pour faciliter la compréhension, le dispositif d'alimentation de fluide de lubrification est une électrovanne.

Ledit dispositif d'alimentation 10 comprend un corps cylindrique 14 enfoncé dans un orifice d'alimentation 15 dans le carter 13 du moteur débouchant dans le conduit de circulation 12 de fluide. Ledit corps cylindrique 14 comporte à une extrémité amont 16 débouchant dans le conduit de circulation 12 de fluide une bouche d'entrée 17 et au moins une bouche de sortie 18 connectée avec des conduits 11 de lubrification du moteur. Selon les figures 1 à 3, le corps cylindrique 14 comprend une ou plusieurs bouches de sorties 18 s'étendant radialement depuis une paroi intérieure dudit corps.

Le corps cylindrique 14 entoure un conduit d'alimentation 19 limité à l'extrémité amont 16 par la bouche d'entrée 17. Un bouchon ou clapet 22 est monté coulissant dans ledit conduit d'alimentation 19 et est tenu à une extrémité amont 20 d'un bras 21 s'étendant sensiblement longitudinalement selon l'axe du corps cylindrique 14. L'extrémité aval opposée 23 du bras 21 est connectée à un moyen électrique 24 apte à faire coulisser le bras 21 et le bouchon 22 longitudinalement ; dans le cas d'une électrovanne, ladite extrémité opposée 23 du bras est entourée par un solénoïde. Ainsi, lors d'un passage de courant dans ledit solénoïde, un champ magnétique est créé qui produit une force apte à faire coulisser ladite extrémité opposée 23 du bras ainsi que le bouchon 22 pour ouvrir ou obturer le conduit d'alimentation 19. Le moyen électrique 24 est agencé dans un carter de protection 25 qui est alors fixé au carter 13 du moteur. L'extrémité aval du corps cylindrique 14 est aussi fixée au carter de protection 25.

Le coulissement du bras 21 et du bouchon 22 permet de connecter la bouche d'entrée 17 avec une ou plusieurs bouches de sorties 18 selon le déplacement du bouchon. Le fluide de lubrification peut pénétrer par la bouche d'entrée 17 dans le corps cylindrique pour rejoindre un des conduits de lubrification 11 qui peuvent conduire vers des pistons (non représentés) par exemple.

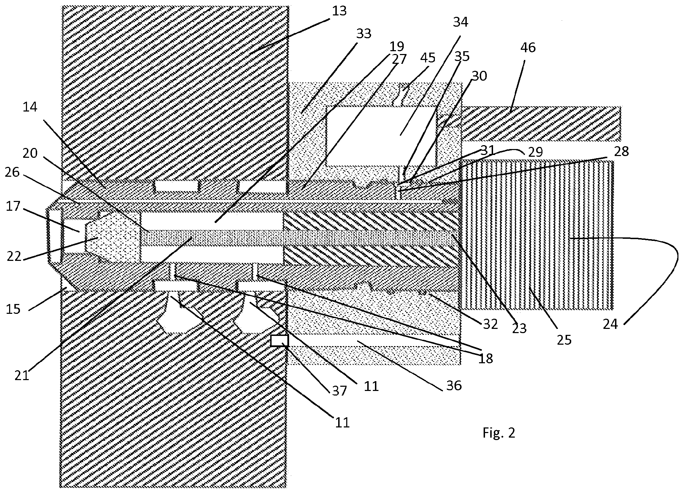

Selon la figure 2 représentant un mode de réalisation préféré de l'invention, un conduit axial de traversée 26 est agencé dans la paroi périphérique 27 du corps cylindrique 14 depuis l'extrémité amont 16 dudit corps. Par exemple, ledit conduit de traversée 26 est obtenu par perçage depuis l'extrémité amont 16 du corps cylindrique jusqu'à l'extrémité aval 17 opposée, ledit perçage ne débouchant dans aucune des bouches de sorties 18. L'extrémité aval opposée du conduit de traversée 26 est ensuite obturée pour avoir un conduit de traversée borgne. Le conduit de traversée 26 est ensuite prolongé sensiblement radialement par un conduit intermédiaire 28 jusqu'à la bordure extérieure 29 de la paroi périphérique 27du corps cylindrique à l'extrémité aval 17 du corps cylindrique. De manière préférentielle, une poche intermédiaire 30 est creusée dans ladite paroi périphérique 27 pour entourer le débouché 31 du conduit intermédiaire 28. De chaque côté de la poche intermédiaire selon l'axe longitudinal X dudit corps cylindrique, sont creusées des rainures circulaires 32 adaptées pour accueillir des joints d'étanchéité.

L'extrémité aval 17 du corps cylindrique traverse une pièce d'appui 33 de manière préférentielle de révolution autour d'un axe confondu avec l'axe X du corps cylindrique. La pièce d'appui 33 entoure une partie de l'extrémité aval 17 du corps cylindrique comprenant le débouché 31 du conduit intermédiaire radial 28 et la poche intermédiaire 30. Les joints d'étanchéité disposés dans les rainures circulaires 32 sont aptes à assurer l'étanchéité entre le corps cylindrique 14 et la pièce d'appui 33 quant au passage du fluide de lubrification. De cette manière, la pièce d'appui 33 peut être associée aisément à différents dispositifs d'alimentation.

Dans ladite pièce d'appui 33 est aménagé un réservoir 34 connecté grâce à un conduit d'amenée 35 au conduit radial intermédiaire 28 et/ou à la poche intermédiaire 30 et dans lequel débouche aussi une extrémité d'un système de mesures 46 de caractéristiques du fluide. Ledit réservoir peut présenter un volume faible à l'extrémité du conduit d'amenée et il peut être connecté à un système de dégazage 45 pour faciliter le remplissage dudit réservoir 34. Le fluide de lubrification peut toutefois pénétrer dans le réservoir et le remplir en comprimant les gaz qui s'y trouvent, ce qui réduit la nécessité dudit système de dégazage pour certains modes de réalisation. La pièce d'appui 33 est par exemple obtenue par moulage sable comprenant un insert sable représentant le réservoir 34 et le conduit d'amenée 35.

Selon un autre mode de réalisation non représenté, on peut creuser plusieurs conduits d'amenée 35 afin de mieux alimenter le réservoir 34.

La pièce d'appui comprend des orifices de fixation 36 traversant longitudinalement ladite pièce 33. Des vis de fixation (non représentées) peuvent alors traverser lesdits orifices 36 pour être enfoncées dans des trous de fixation 37 creusés dans le carter 13 du moteur. Lesdits trous de fixation concerne alors la fixation de la pièce d'appui qui est fixée à l'extérieur du carter et non la fixation du dispositif d'alimentation ce qui permet une standardisation des perçages desdits trous de fixation.

La pièce d'appui 33 comporte également des trous de fixation pour accueillir des vis de fixation (non représentées) du carter de protection 25 du moyen électrique. De cette façon le dispositif d'alimentation est maintenu fixé contre la paroi du carter 13 du moteur par l'intermédiaire de la pièce d'appui 33.

La pièce d'appui 33 est montée autour de l'extrémité aval 17 du corps cylindrique de façon à entourer le débouché 31 du conduit radial 28 intermédiaire et/ou la poche intermédiaire 30 et vient appuyer sur les joints d'étanchéité disposés dans les rainures circulaires 32 d'étanchéité. Le carter de protection 25 du moyen électrique est alors fixé à la pièce d'appui 33 et l'ensemble est ensuite monté et fixé contre le carter 13 du moteur, le corps cylindrique 14 du dispositif traversant l'orifice d'alimentation 15 dans le carter moteur. La pièce d'appui 33 peut également être montée autour de l'extrémité aval du corps cylindrique par frettage, ce qui permet de se dispenser de creuser les rainures circulaires d'étanchéité 32 pour assurer l'étanchéité entre le corps cylindrique 14 et la pièce d'appui 33.

Le fluide circulant dans le conduit de circulation 12 peut alors passer par le conduit de traversée 26 pour atteindre le réservoir 34. Les gaz initialement dans le réservoir sont poussés vers le système de dégazage 45 ou sont simplement comprimés. Aucun obstacle n'est susceptible d'interrompre la liaison entre le conduit de circulation 12 et le réservoir 34. La connexion entre ledit conduit de circulation 12 et le réservoir 34 est donc permanente et les caractéristiques du fluide dans le réservoir 34, notamment la pression dudit fluide sont identiques à celles du fluide dans le conduit de circulation 12 à tout instant.

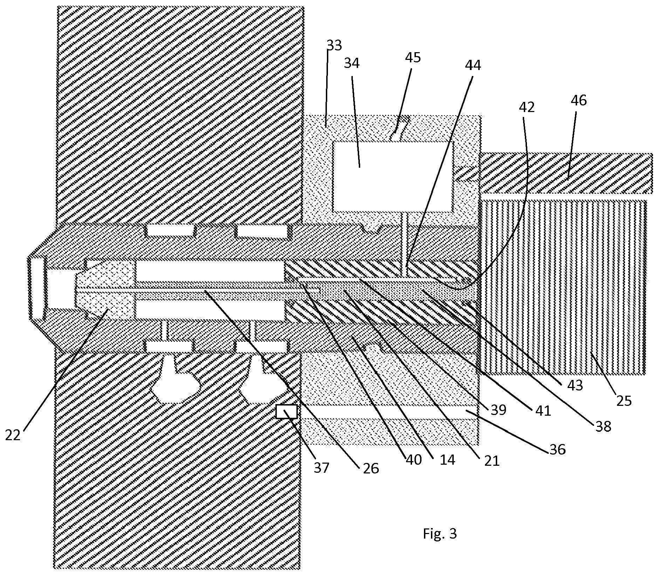

Selon un autre mode de réalisation représenté en figure 3, le conduit de traversée 26 traverse le bouchon ou clapet 22 et le bras 21 jusqu'à une extrémité aval 38 dudit bras en contact avec le moyen électrique. Un anneau de guidage 39 entoure ladite extrémité aval 38 du bras 21 de façon étanche. Le bras 21 est monté coulissant au travers dudit anneau 39 et la largeur de l'anneau étant sensiblement supérieure à la longueur du coulissement du bras.

Un premier conduit radial 40 connecté avec le conduit de traversée 26 est percé pour déboucher à la surface extérieure du bras 21 dans une poche longitudinale 41 creusée dans la paroi intérieure 42 de l'anneau de guidage 39 selon l'axe de l'anneau et de longueur légèrement supérieure à la longueur du coulissement du bras. Des rainures circulaires 43 sont creusées dans ladite paroi intérieure 42 de l'anneau en bordure de la poche longitudinale 41 pour accueillir des joints d'étanchéité entre ledit anneau et le bras coulissant.

Un deuxième conduit radial 44 est percé dans le corps cylindrique 14 et traversant l'anneau de guidage 39 pour déboucher dans la poche longitudinale 41, dans une zone d'extrémité aval 17 du corps cylindrique 14 en regard avec la pièce d'appui 33. Ce deuxième conduit radial est connecté avec le réservoir 34 agencé dans la pièce d'appui. Les liaisons entre le corps cylindrique 14 et la pièce d'appui 33 ainsi que le réservoir 34 sont identiques à ceux décrits dans le mode de réalisation précédent.

Ainsi, le liquide peut passer du conduit de circulation 12 vers le conduit de traversée 26 et remonter pour remplir le réservoir 34. Les gaz initialement dans le réservoir sont poussés vers le système de dégazage 45. Aucun obstacle n'est susceptible d'interrompre la liaison entre le conduit de circulation 12 et le réservoir 34. La connexion entre ledit conduit de circulation 12 et le réservoir 34 est donc permanente et les caractéristiques du fluide dans le réservoir 34 sont identiques à celles du fluide dans le conduit de circulation 12 à tout instant.

Le système de mesures 46 peut alors fournir des valeurs représentatives des caractéristiques dudit fluide. Ledit système de mesures 46 est dans une liste comprenant un manocontact et un thermocouple. On peut ainsi mesurer la pression ou la température du fluide de lubrification.

Le manocontact peut être relié à une unité de contrôle pour évaluer la pression de fluide de lubrification par rapport par exemple à un seuil de fonctionnement lié au moteur thermique. Ainsi, si la pression du fluide de lubrification est inférieure audit seuil, l'unité de contrôle peut envoyer un signal d'avertissement visible par le conducteur qui pourra alors mettre en place une procédure de sauvegarde du moteur, par exemple réduire le fonctionnement dudit moteur avant un examen approfondi dans un garage.

L'objectif de l'invention est atteint : le dispositif d'alimentation de fluide permet d'associer un système de mesures de fluide avec un dispositif d'alimentation de fluide en nécessitant qu'un unique orifice d'alimentation percé dans le carter du moteur.

Comme il va de soi, l'invention ne se limite pas aux seules formes d'exécution de cette prise, décrites ci-dessus à titre d'exemples. C'est ainsi notamment que pour le deuxième de réalisation, le premier conduit radial intermédiaire dans l'anneau et l'anneau lui-même peuvent être remplacé par un conduit souple dont les extrémités sont fixées d'une part au conduit de traversée et d'autre part au conduit radial intermédiaire dans le corps cylindrique.

L'invention embrasse toutes les variantes comprises dans la portée des revendications.

## Revendications

1. Dispositif d'alimentation (10) en fluide de lubrification pour un moteur à combustion interne, et comprenant :
- un corps cylindrique (14) agencé dans un orifice d'alimentation (15) débouchant dans un conduit de circulation (12) de fluide, ledit corps comportant une bouche d'entrée (17) disposée en une extrémité axiale amont (16) et au moins une bouche de sortie (18) connectée avec un conduit de lubrification (11) du moteur,
- un bouchon (22) fixé à une extrémité d'un bras (21) et entouré par le corps cylindrique, ledit bouchon étant apte à obturer/ouvrir la bouche d'entrée,
**caractérisé en ce que** le dispositif comprend un réservoir (34) aménagé dans une pièce d'appui (33) fixée au carter (13) du moteur et connecté en permanence avec le conduit de circulation (12) de fluide, dans lequel débouche un système de mesure (46) de caractéristiques du fluide.

2. Dispositif d'alimentation (10) en fluide selon la revendication 1, **caractérisé en ce qu'**il comprend un conduit axial de traversée (26) dont une extrémité amont est connectée au conduit de circulation (12) et dont l'extrémité aval opposée est connectée au réservoir (34).

3. Dispositif d'alimentation en fluide selon la revendication 2, **caractérisé en ce que** le conduit axial de traversée (26) est aménagé dans le corps cylindrique (14).

4. Dispositif d'alimentation en fluide selon la revendication 2, **caractérisé en ce que** le conduit axial de traversée (26) est aménagé dans le bras (21) et traverse le bouchon (22).

5. Dispositif d'alimentation en fluide selon l'une quelconque des revendications 1 à 4, **caractérisé en ce que** le corps cylindrique (14) traverse la pièce d'appui (33).

6. Dispositif d'alimentation en fluide selon l'une quelconque des revendications 1 à 5, **caractérisé en ce que** le système de mesures (46) est fixé en appui sur la pièce d'appui (33).

7. Dispositif selon l'une quelconque des revendications 1 à 6, **caractérisé en ce que** la pièce d'appui (33) est disposée à l'extérieur du carter (13) du moteur.

8. Dispositif d'alimentation en fluide selon l'une quelconque des revendications 1 à 7, **caractérisé en ce que** le système de mesures (46) est dans une liste comprenant un manocontact ou un thermocouple.

9. Dispositif d'alimentation en fluide selon l'une quelconque des revendications 1 à 8, **caractérisé en ce que** le dispositif d'alimentation (10) est fixé au carter (13) du moteur par l'intermédiaire de la pièce d'appui (33).

## Patentansprüche

1. Vorrichtung zur Zuführung (10) von Schmierfluid für einen Verbrennungsmotor, welche umfasst:
- einen zylindrischen Körper (14), der in einer Zuführungsöffnung (15) angeordnet ist, die in einen Fluidzirkulationskanal (12) mündet, wobei der Körper eine Eintrittsmündung (17), die an einem stromaufwärtigen axialen Ende (16) angeordnet ist, und wenigstens eine Austrittsmündung (18), die mit einem Schmierkanal (11) des Motors verbunden ist, aufweist,
- einen Stopfen (22), der an einem Ende eines Armes (21) befestigt und von dem zylindrischen Körper umgeben ist, wobei der Stopfen geeignet ist, die Eintrittsmündung zu verschließen/zu öffnen,
**dadurch gekennzeichnet, dass** die Vorrichtung einen Behälter (34) umfasst, der in einem am Gehäuse (13) des Motors befestigten Stützteil (33) angeordnet ist und dauerhaft mit dem Fluidzirkulationskanal (12) verbunden ist, in welchen ein System zur Messung (46) von Merkmalen des Fluids mündet.

2. Vorrichtung zur Zuführung (10) von Fluid nach Anspruch 1, **dadurch gekennzeichnet, dass** sie einen axialen Durchgangskanal (26) umfasst, von dem ein stromaufwärtiges Ende mit dem Zirkulationskanal (12) verbunden ist und dessen entgegengesetztes, stromabwärtiges Ende mit dem Behälter (34) verbunden ist.

3. Vorrichtung zur Zuführung von Fluid nach Anspruch 2, **dadurch gekennzeichnet, dass** der axiale Durchgangskanal (26) in dem zylindrischen Körper (14) angeordnet ist.

4. Vorrichtung zur Zuführung von Fluid nach Anspruch 2, **dadurch gekennzeichnet, dass** der axiale Durchgangskanal (26) in dem Arm (21) angeordnet ist und den Stopfen (22) durchquert.

5. Vorrichtung zur Zuführung nach einem der Ansprüche 1 bis 4, **dadurch gekennzeichnet, dass** der zylindrische Körper (14) das Stützteil (33) durchquert.

6. Vorrichtung zur Zuführung nach einem der Ansprüche 1 bis 5, **dadurch gekennzeichnet, dass** das Messsystem (46) an dem Stützteil (33) anliegend befestigt ist.

7. Vorrichtung nach einem der Ansprüche 1 bis 6, **dadurch gekennzeichnet, dass** das Stützteil (33) außerhalb des Gehäuses (13) des Motors angeordnet ist.

8. Vorrichtung zur Zuführung von Fluid nach einem der Ansprüche 1 bis 7, **dadurch gekennzeichnet, dass** das Messsystem (46) zu einer Gruppe gehört, die einen Druckkontakt oder ein Thermoelement umfasst.

9. Vorrichtung zur Zuführung von Fluid nach einem der Ansprüche 1 bis 8, **dadurch gekennzeichnet, dass** die Vorrichtung zur Zuführung (10) über das Stützteil (33) am Gehäuse (13) des Motors befestigt ist.

## Claims

1. Device (10) for supplying lubricating fluid to an internal combustion engine, and comprising:
- a cylindrical body (14) arranged in a supply orifice (15) opening into a fluid circulation duct (12), said body comprising an inlet opening (17) arranged at an upstream axial end (16), and at least one outlet opening (18) connected to a lubrication duct (11) of the engine,
- a plug (22) fixed to one end of an arm (21) and surrounded by the cylindrical body, said plug being able to close/open the inlet opening, **characterized in that** the device comprises a reservoir (34) which is arranged in a support part (33) fixed to the engine casing (13) and is permanently connected to the fluid circulation duct (12) and into which a system (46) for measuring characteristics of the fluid opens.

2. Fluid supply device (10) according to Claim 1, **characterized in that** it comprises an axial passage duct (26), an upstream end of which is connected to the circulation duct (12) and the opposite downstream end of which is connected to the reservoir (34).

3. Fluid supply device according to Claim 2, **characterized in that** the axial passage duct (26) is arranged in the cylindrical body (14).

4. Fluid supply device according to Claim 2, **characterized in that** the axial passage duct (26) is arranged in the arm (21) and passes through the plug (22).

5. Fluid supply device according to any of Claims 1 to 4, **characterized in that** the cylindrical body (14) passes through the support part (33).

6. Fluid supply device according to any of Claims 1 to 5, **characterized in that** the measuring system (46) is fixed resting on the support part (33).

7. Device according to any of Claims 1 to 6, **characterized in that** the support part (33) is arranged outside the engine casing (13).

8. Fluid supply device according to any of Claims 1 to 7, **characterized in that** the measuring system (46) is in a list comprising a pressure contact or a thermocouple.

9. Fluid supply device according to any of Claims 1 to 8, **characterized in that** the supply device (10) is fixed to the engine casing (13) via the support part (33).
